# EUROPÄISCHE PATENTSCHRIFT

(11) **EP 0 933 519 B1**
(45) Veröffentlichungstag und Bekanntmachung des Hinweises auf die Patenterteilung: **23.07.2003**
(21) Anmeldenummer: 98120616.2
(22) Anmeldetag: 02.11.1998
(51) Int. Cl.: F02D 33/02, F02D 13/02, F01N 3/18

(54) **Brennkraftmaschine und Verfahren zum Betreiben einer aufgeladenen Brennkraftmaschine**
Internal-combustion engine and procedure for the operation of a charged internal-combustion engine
Moteur à combustion interne et procédé pour le fonctionnement compressé d'un moteur à combustion interne

(30) Priorität: 31.01.1998 DE 19803807
(43) Veröffentlichungstag der Anmeldung: 04.08.1999
(73) Patentinhaber: Volkswagen Aktiengesellschaft, 38436 Wolfsburg (DE)
(72) Erfinder: Pott, Ekkehard, Dr., 38518 Gifhorn (DE)

(56) Entgegenhaltungen:
- EP-A- 0 404 114
- EP-A- 0 718 475
- DE-A- 3 506 106
- DE-A- 3 723 599

## Beschreibung

Die Erfindung betrifft ein Verfahren zum Betreiben einer aufgeladenen Brennkraftmaschine, wobei eine Motorsteuerung einen Öffnungsvorgang von Auslaßventilen der Brennkraftmaschine und einen Einspritzvorgang von Kraftstoff steuert, gemäß dem Oberbegriff des Anspruchs 1. Die Erfindung betrifft ferner eine Brennkraftmaschine mit einer Vorrichtung zum Aufladen dieser und einem Motorsteuergerät, welches einen zeitlichen Ablauf eines Öffnens und Schließens von Auslaßventilen und eine Kraftstoffeinspritzung steuert, gemäß dem Oberbegriff des Anspruchs 13.

Die Aufladung bietet gegenüber dem freisaugenden Motor insbesondere für eine Diesel-Brennkraftmaschine folgende Vorteile: Ein höheres Drehmoment bei niedrigen Drehzahlen und damit die Möglichkeit zur längeren Übersetzung bei gleichen Fahrleistungen Verbrauchsminderung, eine höhere Spitzenleistung und damit die Möglichkeit zur Hubraumverkleinerung mit entsprechender Verbrauchsminderung sowie einen höheren Luftüberschuß mit entsprechender Emissionsminderung, insbesondere von NOₓ und Partikeln bzw. Ruß.

Die Aufladung wird jedoch nach oben durch die Belastbarkeitsgrenze beispielsweise des Abgasturboladers sowie der Brennkraftmaschine und nach unten durch die bereitgestellte Abgasmenge begrenzt. Diese ist wiederum von der Frischluft- und der Kraftstoffmenge abhängig. Zur Verminderung von NOₓ-Emissionen ist grundsätzlich ein hoher Luftüberschuß wünschenswert. Ferner wirken niedrige Brennraumtemperaturen ebenfalls mindernd auf den NOₓ-Ausstoß. Beide Aspekte werden z.B. durch eine Ladeluftkühlung durch Temperaturminderung und Erhöhen der Luftdichte gefördert. Der Partikelausstoß wird durch diese Maßnahmen zumindest nicht wesentlich gesteigert, sondern zumeist ebenfalls günstig beeinflußt.

Mit dem bekannten Miller- bzw. Atkinson-Verfahren (sehr frühes / spätes Schließen des Einlaßventils und Füllungskompensation über Aufladung) wird ein Teil der Verdichtungsarbeit auf den dem Motor vorgeschalteten Verdichter eines Abgasturboladers verlegt. Über die Zwischenkühlung im Ladeluftkühler und ggf. die Auskühlung bei der Expansion im Brennraum wird letztendlich die Verdichtungsendtemperatur gesenkt und auf diese Weise die NOₓ-Bildung während der Verbrennung gemindert. Die vom Turbolader lieferbare mögliche zusätzliche Luftmasse zur Kompensation der Füllungsverluste ist jedoch motorbetriebsabhängig begrenzt. Eine Anhebung der Luftmasse in jedem Motorbetriebspunkt ist möglich, wenn mehr Expansionsenergie der Turbine zur Verfügung gestellt wird.

Ein sogn. Hyperbarverfahren schaltet hierzu dem Auslaßventil einen Brenner nach, der zusätzliche Enthalpie vor der Turbine erzeugt. Der Schwerpunkt bei derartigen bekannten Konzepten liegt auf der äußerst hohen Drehmomentsteigerung bei niedrigen Drehzahlen. Nachteilig bei diesem Verfahren ist der aufwendige Brenner in Bezug auf Kosten, Gewicht, Einbauraum etc. und die Wirkungsgradeinbußen durch den zusätzlichen Kraftstoffeinsatz.

Daher beschreibt die DE 35 06 106 A1 ein Verfahren zur Erhöhung der Leistung einer Brennkraftmaschine mittels Steigerung der Aufladung durch teilweise Verlagerung der Expansionsenergie vom Kolben auf die Turbine. Hierbei wird der Öffnungsbeginn der Auslaßventile der Brennkraftmaschine nach früh verstellt. Diese Verfahren hat jedoch den Nachteil, daß es nicht ohne Mehrverbrauch zu realisieren ist.

Femer ist es aus DE 37 23 599 C2 bekannt, eine zweite Kraftstoffmenge zu einem späteren Zeitpunkt als OT einzuspritzen, wobei durch die Verbrennung dieses zusätzlichen Kraftstoffes während der Expansionsphase ein höheres Druck- und Temperaturniveau erzielt wird, was die Effektivität des Kreisprozesses erhöht. Gleichzeitig wird die Kraftstoffzufuhr derart bemessen, daß eine zulässige Abgastemperatur von 1500 bis 1600 Grad K bei günstigen Luftüberschußzahlen nicht überschritten wird. Dieses Verfahren berücksichtigt jedoch nicht den Einfluß der eingespritzten Kraftstoffmengen auf den Lambda-Wert und stellt somit letztlich nicht eine verminderte Schadstoffemission sicher.

Die WO 96/03571 offenbart eine Nacheinspritzung von Kraftstoff zur Initiierung einer Regeneration eines Partikelfilters. Die WO 96/03572 beschreibt eine Nacheinspritzung zum Aktivieren eines DENOX-Katalysators. Diese Verfahren berücksichtigen jedoch nur einen sehr kurzfristigen bedarf an zusätzlicher Energie im Abgas zum Anstoßen anderer Redaktion, nicht jedoch einen längerfristigen Schadstoffausstoß. Es wird auch hier nicht der Einfluß des zusätzlichen Kraftstoffs auf den Lambda-Wert und damit die Schadstoffemission berücksichtigt. Die kurzfristigen zusätzlichen Kraftstoffeinspritzungen erhöhen dadurch in jedem Fall den Gesamtschadstoffausstoß.

Die EP 0 404 114 A2 offenbart eine auf geladene Brennkraftmaschine, wobei ein Betrieb mit magerem Luft-Kraftstofgemisch auch bei niedriger Last und niedriger Drehzahl Sichergestellt werden kann.

Der vorliegenden Erfindung liegt daher die Aufgabe zugrunde, eine Verfahren und eine Brennkraftmaschine der obengenannten Art zur Verfügung zu stellen, wobei die obengenannten Nachteile überwunden werden und eine Emissionsminderung bei gleichzeitig verbesserter Effektivität des in der Brennkraftmaschine ablaufenden Kreisprozesses erzielt wird.

Diese Aufgabe wird erfindungsgemäß durch ein Verfahren der o.g. Art mit den in Anspruch 1 angegebenen Verfahrensschritten und durch eine Brennkraftmaschine der o.g. Art mit den in Anspruch 13 gekennzeichneten Merkmalen gelöst. Vorteilhafte Ausgestaltungen der Erfindung sind in den abhängigen Ansprüchen angegeben.

Bein einem Verfahren der o.g. Art sind erfindungsgemäß folgende Schritt vorgesehen:
(a) Messen eines momentanen Lambda-Wertes während des Betriebs der Brennkraftmaschine,
(b) Bestimmen eines minimalen Lambda-Wertes,
(c) Vergleichen des gemessenen Lambda-Wertes mit dem bestimmten minimalen Lambda-Wert,
(d) Berechnen einer zeitveränderten Auslaßventilöffnung und/oder einer Nacheinspritzung von Kraftstoff derart, daß sich als momentaner Lambda-Wert wenigstens der vorbestimmte minimale Lambda-Wert einstellt, wenn in Schritt (c) der gemessene Lambda-Wert kleiner als der vorbestimmte minimale Lambda-Wert ist und
(e) Übergeben der berechneten Werte für die zeitveränderte Auslaßventilöffnung und/oder der Nacheinspritzung von Kraftstoff an das Motorsteuergerät.

Dies hat den Vorteil, daß durch eine Verstellung eines Öffnungszeitpunktes der Auslaßventile und/oder durch eine Nacheinspritzung von Kraftstoff eine Ladedrucksteigerung bei gleichzeitiger Verminderung von umweltschädlichen Emission, wie beispielsweise NOₓ oder Ruß, erzielt wird, wobei dies erst und nur in entsprechenden emissionskritischen Betriebsphasen der Brennkraftmaschine erfolgt. Feme sind Sekundäreffekte, wie eine längere Getriebeübersetzung oder ein Hubraum-Downsizing zur Verbrauchs- und Emissionsminderung nutzbar.

Ein andauernd optimaler Betrieb der Brennkraftmaschine bezüglich Ladedruck und Emissionsminderung wird dadurch erzielt, daß die Schritte (a) bis (e) des o.g. Verfahrens während des Betriebes der Brennkraftmaschine zyklisch wiederholt werden.

Eine Anhebung der Luftmasse in jedem Motorbetriebspunkt und eine entsprechende Erhöhung der beispielsweise einer Turbine eines Abgasturboladers zur Verfügung gestellten Expansionsenergie erzielt man dadurch, daß die zeitveränderte Auslaßventilöffnung eine Verstellung der Auslaßventilöffnung nach früh ist. Eine Vorkomprimierung des Abgases beispielsweise vor einer Turbine eines Abgasturboladers mit entsprechender Erhöhung der der Turbine zur Verfügung gestellten Expansionsenergie erzielt man dadurch, daß die zeitveränderte Auslaßventilöffnung eine Verstellung der Auslaßventilöffnung nach spät ist.

Dadurch, daß in Schritt (d) für die Nacheinspritzung ein Zeitpunkt der Nacheinspritzung, eine Kraftstoffmenge für die Nacheinspritzung und/oder ein Druckverlauf für die Nacheinspritzung berechnet wird, bleibt bei einem Abbrand des Kraftstoffes eine lokale Temperatur und einer kritischen Temperatur von 2000 K, wodurch keine zusätzlichen NOₓ-Emissionen entstehen.

Zweckmäßigerweise ist in Schritt (b) der minimale Lambda-Wert ein fest vorbestimmter Wert, beispielsweise Lambda = 2, oder es wird der minimale Lambda-Wert aus momentanen Motor- und/oder Fahrzeugbetriebsparametem bestimmt. Hierbei sind die momentanen Motor- und/oder Fahrzeugbetriebsparameter eine Drehzahl, eine Last, ein aktueller Ladedruck, eine Kühlmitteltemperatur und/oder eine Abgastemperatur.

In einer vorteilhaften Weiterbildung der Erfindung wird der minimale Lambda-Wert aus einem Kennfeld für den oder die verwendeten Motor- und/oder Fahrzeugbetriebsparametem bestimmt.

In einer besonders bevorzugten Ausführungsform wird in Schritt (a) der momentane Lambda-Wert durch Messung mittels einer Breitband-Lambdasonde vor und/oder nach einem Katalysator bestimmt oder aus einer in einem Saugrohr der Brennkraftmaschine gemessenen angesaugten Luftmasse und einer eingespritzten Kraftstoffmenge berechnet.

In besonders vorteilhafter Weise ist die Brennkraftmaschine eine Otto- oder Diesel-Brennkraftmaschine.

Zweckmäßigerweise wird die Brennkraftmaschine mittels eines Abgasturboladers oder Druckwellenladers aufgeladen.

Bei einer Brennkraftmaschine der o.g. Art ist erfindungsgemäße eine erste Vorrichtung zum Bestimmen eines minimalen Lambda-Wertes und eine zweite Vorrichtung zum Messen eines momentanen Lambda-Wertes der Brennkraftmaschine vorgesehen, wobei beide Vorrichtung mit einer dritten Vorrichtung verbunden sind, die den bestimmten Lambda-Wert und den gemessenen Lambda-Wert miteinander vergleicht, wobei ferner die dritte Vorrichtung mit einer Berechnungsvorrichtung verbunden ist, welche für den Fall, daß der gemessene Lambda-Wert kleiner ist als der bestimmte minimale Lambda-Wert Daten für eine Zeitverstellung eines Öffnungszeitpunktes der Auslaßventile und/oder für eine Nacheinspritzung von Kraftstoff derart berechnet, daß sich als momentaner Lambda-Wert wenigstens der vorbestimmte minimale Lambda-Wert einstellt, wobei ferner die Berechnungsvorrichtung mit dem Motorsteuergerät verbunden ist und die berechneten Daten an das Motorsteuergerät weitergibt.

Dies hat den Vorteil, daß durch eine Verstellung eines Öffnungszeitpunktes der Auslaßventile und/oder durch eine Nacheinspritzung von Kraftstoff eine Ladedrucksteigerung bei gleichzeitiger Verminderung von umweltschädlichen Emission, wie beispielsweise NOₓ oder Ruß, erzielt wird, wobei dies erst und nur in entsprechenden emissionskritischen Betriebsphasen der Brennkraftmaschine erfolgt. Ferne sind Sekundäreffekte, wie eine längere Getriebeübersetzung oder ein Hubraum-Downsizing zur Verbrauchs- und Emissionsminderung nutzbar.

Eine Anhebung der Luftmasse in jedem Motorbetriebspunkt und eine entsprechende Erhöhung der beispielsweise einer Turbine eines Abgasturboladers zur Verfügung gestellten Expansionsenergie erzielt man dadurch, daß die Zeitverstellung eines Öffnungszeitpunktes der Auslaßventile eine Verstellung der Auslaßventilöffnung nach früh ist. Eine Vorkomprimierung des Abgases beispielsweise vor einer Turbine eines Abgasturboladers mit entsprechender Erhöhung der der Turbine zur Verfügung gestellten Expansionsenergie erzielt man dadurch, daß die Zeitverstellung eines Öffnungszeitpunktes der Auslaßventile eine Verstellung der Auslaßventilöffnung nach spät ist.

Dadurch, daß die Daten für die Nacheinspritzung einen Zeitpunkt der Nacheinspritzung, eine Kraftstoffmenge für die Nacheinspritzung und/oder einen Druckverlauf für die Nacheinspritzung umfassen, bleibt bei einem Abbrand des Kraftstoffes eine lokale Temperatur und einer kritischen Temperatur von 2000 K, wodurch keine zusätzlichen NOₓ-Emissionen entstehen.

Zweckmäßigerweise ist die erste Vorrichtung zum Bestimmen eines minimalen Lambda-Wertes ein Speicher für einen fest vorbestimmten Wert, beispielsweise Lambda = 2, oder eine Berechnungsvorrichtung, welche den minimale Lambda-Wert aus momentanen Motor- und/oder Fahrzeugbetriebsparametern berechnet. Hierbei sind die momentanen Motor- und/oder Fahrzeugbetriebsparameter eine Drehzahl, eine Last, ein aktueller Ladedruck, eine Kühlmitteltemperatur und/oder eine Abgastemperatur.

In einer vorteilhaften Weiterbildung der Erfindung ist der minimale Lambda-Wert in einem Kennfeld für den oder die verwendeten Motor- und/oder Fahrzeugbetriebsparametern in der ersten Vorrichtung abgelegt.

In einer besonders bevorzugten Ausführungsform ist die zweite Vorrichtung zum Messen eines momentanen Lambda-Wertes der Brennkraftmaschine eine vor oder nach einem Katalysator in einer Abgasleitung angeordnete Breitband-Lambdasonde oder eine Berechnungsvorrichtung, welche mit einem in einem Saugrohr der Brennkraftmaschine angeordneten Luftmassenmesser verbunden ist.

In besonders vorteilhafter Weise ist die Brennkraftmaschine eine Otto- oder Diesel-Brennkraftmaschine.

Zweckmäßigerweise wird die Brennkraftmaschine mittels eines Abgasturboladers oder Druckwellenladers aufgeladen.

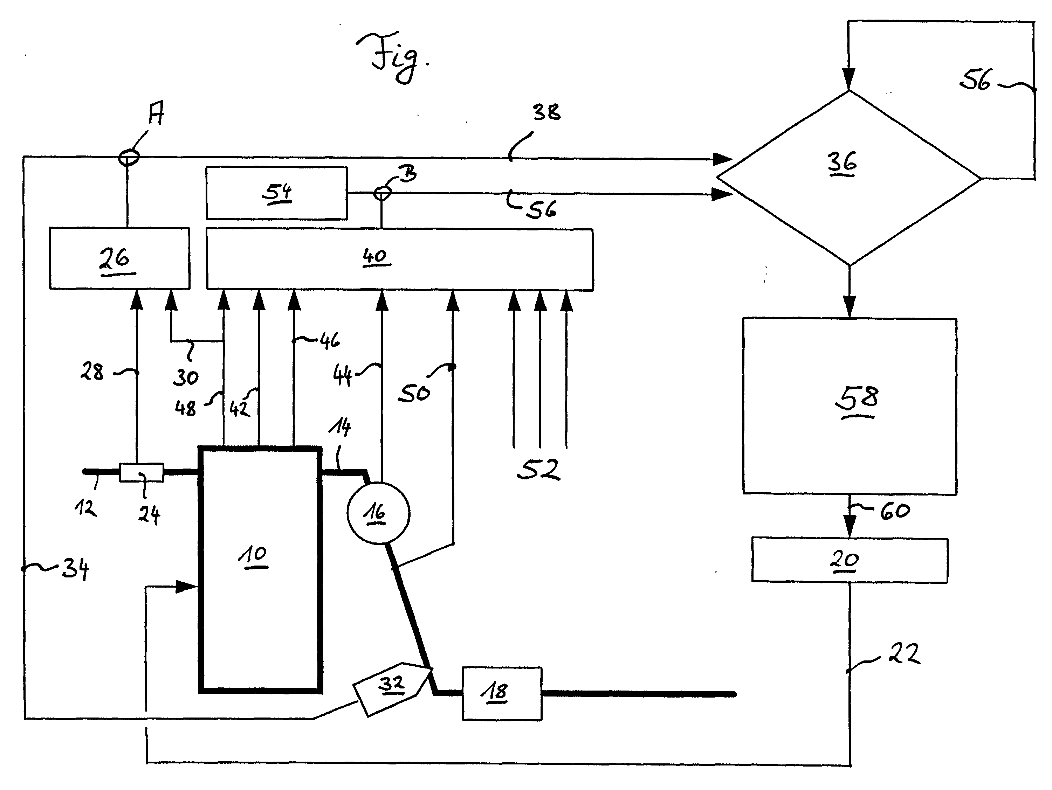

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt ein Blockschaltbild einer bevorzugten Ausführungsform einer erfindungsgemäßen Brennkraftmaschine, mit welcher das erfindungsgemäße Verfahren ausführbar ist.

Ein Motor 10 umfaßt ein Saugrohr 12 und eine Abgas-Sammelleitung 14, wobei in letzterer ein Abgasturbolader 16 und ein Katalysator 18 angeordnet sind. Ein Motorsteuergerät 20 steuert über Steuerleitung 22 u.a. eine zeitlichen Verlauf eines Öffnens und Schließens von nicht näher dargestellten Abgasventilen und eine Menge, einen Zeitpunkt und einen Druckverlauf einer Kraftstoffeinspritzung. In einer bevorzugten Ausführungsform ist in das Saugrohr 12 ein Luftmassenmesser 24

eingeschleift, wobei eine erste Berechnungsvorrichtung 26 aus dem über Leitung 28 zugeführten Luftmassenwert des Luftmassenmessers 24 und aus einem über Leitung 30 zugeführten Wert einer eingespritzten Kraftstoffmenge 48 ein dem momentanen Betriebszustand des Motors 10 entsprechendes Lambda, d.h. ein Verhältnis von Luftmenge zu Kraftstoffmenge, berechnet.

Alternativ ist statt dessen eine Breitband-Lambdasonde 32 vorgesehen, welche in der Abgas-Sammelleitung 14 den momentanen Lambda-Wert mißt und über Leitung 34 weitergibt. Am Punkt A ist somit ein gemessener momentaner Lambda-Wert vorhanden, wobei in einer bevorzugten Ausführungsform die Berechnungsvorrichtung 26 mit dem Luftmassenmesser 24 und in einer anderen bevorzugten Ausführungsform die Breitband-Lambdasonde 32 diesen Wert mißt. Es ist auch möglich, beide Ausführungsformen zu kombinieren.

Ferner ist eine zweite Berechnungsvorrichtung 40 vorgesehen, welche aus momentanen Motor- und/oder Fahrzeugbetriebsparametern, wie beispielsweise einer Drehzahl 42, einer Last, einem aktuellen Ladedruck 44, einer Kühlmitteltemperatur 46, einer eingespritzten Kraftstoffmenge 48 und/oder einer Abgastemperatur 50 bzw. ggf. weiteren Einflußgrößen 52 einen minimalen Lambda-Wert bestimmt. Hierbei ist in der zweiten Berechnungsvorrichtung 40 beispielsweise ein Kennfeld für den minimalen Lambda-Wert in Abhängigkeit wenigstens einem der vorgenannten Parameter abgelegt.

Alternativ ist ein Speicher 54 vorgesehen, welcher einen festen Wert für den minimalen Lambda-Wert enthält, beispielsweise Lambda = 2. Am Punkt B liegt somit ein bestimmter minimaler Lambda-Wert vor, wobei in einer bevorzugten Ausführungsform die zweite Berechnungsvorrichtung 40 und in einer anderen bevorzugten Ausführungsform der Speicher 54 diesen minimalen Lambda-Wert zur Verfügung stellt. Es ist auch möglich, beide Ausführungsformen zu kombinieren.

Vom Punkt A wird der gemessene momentane Lambda-Wert über Leitung 38 und vom Punkt B wird der bestimmte minimale Lambda-Wert über Leitung 56 einem Vergleicher 36 zugeführt, welcher diese beiden Werte vergleicht. Sollte das Ergebnis dieses Vergleichs lauten, daß der gemessene momentane Lambda-Wert gleich oder größer dem bestimmten minimalen Lambda-Wert ist, so erfolgt über Schleife 56 kein Eingriff in die Motorsteuerung.

Sollte jedoch der gemessene momentane Lambda-Wert kleiner sein als der bestimmte minimale Lambda-Wert, so werden in einer dritten Berechnungsvorrichtung 58 Daten für eine zeitliche Verschiebung des Öffnens der Auslaßventile und/oder Daten bezüglich Menge, Zeitpunkt und Druckverlauf eine Nacheinspritzung von Kraftstoff berechnet. Diese Daten werden über eine Leitung 60 an das Motorsteuergerät 20 weitergegeben, welche eine zeitliche Verschiebung des Öffnens der Auslaßventile und/oder eine Nacheinspritzung von Kraftstoff entsprechend steuert. Die zeitliche Verschiebung des Öffnens der Auslaßventile kann eine Verschiebung in Richtung früher oder später, beispielsweise bezüglich eines OT, sein. Die Nacheinspritzung erfolgt bevorzugt nach OT. Die von der dritten Berechnungsvorrichtung 58 berechneten Daten werden dabei derart bestimmt, daß wenigstens der bestimmte minimale Lambda-Wert gehalten wird.

Es ist mit oder ohne Änderung der Auslaß-Steuerzeiten eine erneute Einspritzung von Kraftstoff weit nach OT in der Expansionsphase möglich, so daß bei dessen Abbrand die kritische lokale Temperatur von 2000 K nicht überschritten wird und keine zusätzlichen NOₓ-Emissionen entstehen. Dieses Verfahren kommt bevorzugt in den emissionskritischen Betriebsphasen des Motors zum Einsatz, sofern nicht die mögliche Verbesserung der Fahrleistungen ausgenutzt werden soll. Das erfindungsgemäße Verfahren kann auch mit dem Miller- bzw. Atkinson-Verfahren kombiniert werden. Damit kann die Erhöhung der Luftmasse (bzw. Lambda), die wirksamere Zwischenkühlung und die Expansionsauskühlung kombiniert werden.

Das erfindungsgemäße ladedrucksteigemde Verfahren wird mit Nacheinspritzung bzw. Verstellung der Auslaßventilöffnung einzeln oder in Kombination so eingesetzt, daß bei Unterschreiten des vorher festgelegten minimalen Lambda-Wertes durch den Einsatz dieses Verfahrens der minimale Lambda-Wert zumindest gehalten werden kann. Der gemessene Lambda-Wert kann durch Messung mittels der Breitband-Lambdasonde 32 vorzugsweise vor, aber auch nach einem ersten Katalysator 18 ermittelt werden. Alternativ erfolgt die vorerwähnte rechnerische Ermittlung aus der angesaugten Luftmasse, gemessen durch den Luftmassenmesser 24 im Saugrohr 12 des Motors 10, und der Einspritzmenge 48, die als Information beispielsweise aus dem Steuergerät 20 ausgefaßt werden kann. Der minimale Lambda-Wert kann als fester Wert, z.B. Lambda - min = 2, definiert werden. In Abhängigkeit von Motor- und Fahrzeugbetriebsparametem, z.B. Drehzahl, Last, aktueller Ladedruck, Kühlmitteltemperatur, Abgastemperatur etc., ist der minimale Lambda-Wert auch in Kennfeldform abgelegt.

## Patentansprüche

1. Verfahren zum Betreiben einer aufgeladenen Brennkraftmaschine, wobei eine Motorsteuerung einen Öffnungsvorgang von Auslaßventilen der Brennkraftmaschine und einen Einspritzvorgang von Kraftstoff steuert,
**gekennzeichnet durch** folgende Schritte,
(a) Messen eines momentanen Lambda-Wertes während des Betriebs der Brennkraftmaschine,
(b) Bestimmen eines minimalen Lambda-Wertes,
(c) Vergleichen des gemessenen Lambda-Wertes mit dem bestimmten minimalen Lambda-Wert,
(d) Berechnen einer zeitveränderten Auslaßventilöffnung und/oder einer Nacheinspritzung von Kraftstoff derart, daß sich als momentaner Lambda-Wert wenigstens der vorbestimmte minimale Lambda-Wert einstellt, wenn in Schritt (c) der gemessene Lambda-Wert kleiner als der vorbestimmte minimale Lambda-Wert ist und
(e) Übergeben der berechneten Werte für die zeitveränderte Auslaßventilöffnung und/oder der Nacheinspritzung von Kraftstoff an das Motorsteuergerät.

2. Verfahren nach Anspruch 1,
**dadurch gekennzeichnet, daß**
die Schritte (a) bis (e) während des Betriebes der Brennkraftmaschine zyklisch wiederholt werden.

3. Verfahren nach Anspruch 1 oder 2,
**dadurch gekennzeichnet, daß**
die zeitveränderte Auslaßventilöffnung eine Verstellung der Auslaßventilöffnung nach früh oder spät ist.

4. Verfahren nach einem der vorhergehenden Ansprüche,
**dadurch gekennzeichnet, daß**
in Schritt (d) für die Nacheinspritzung ein Zeitpunkt der Nacheinspritzung, eine Kraftstoffmenge für die Nacheinspritzung und/oder ein Druckverlauf für die Nacheinspritzung berechnet wird.

5. Verfahren nach einem der vorhergehenden Ansprüche,
**dadurch gekennzeichnet, daß**
in Schritt (b) der minimale Lambda-Wert ein fest vorbestimmter Wert, beispielsweise Lambda = 2, ist.

6. Verfahren nach einem der Ansprüche 1 bis 4,
**dadurch gekennzeichnet, daß**
in Schritt (b) der minimale Lambda-Wert aus momentanen Motor- und/oder Fahrzeugbetriebsparametem bestimmt wird.

7. Verfahren nach Anspruch 6,
**dadurch gekennzeichnet, daß**
die momentanen Motor- und/oder Fahrzeugbetriebsparameter eine Drehzahl, eine Last, ein aktueller Ladedruck, eine Kühlmitteltemperatur und/oder eine Abgastemperatur sind.

8. Verfahren nach einem der vorhergehenden Ansprüche,
**dadurch gekennzeichnet, daß**
der minimale Lambda-Wert aus einem Kennfeld für den oder die verwendeten Motor- und/oder Fahrzeugbetriebsparametern bestimmt wird.

9. Verfahren nach einem der vorhergehenden Ansprüche,
**dadurch gekennzeichnet, daß**
in Schritt (a) der momentane Lambda-Wert durch Messung mittels einer Breitband-Lambdasonde vor und/oder nach einem Katalysator bestimmt wird.

10. Verfahren nach einem der Ansprüche 1 bis 8,
**dadurch gekennzeichnet, daß**
in Schritt (a) der momentane Lambda-Wert aus einer in einem Saugrohr der Brennkraftmaschine gemessenen angesaugten Luftmasse und einer eingespritzten Kraftstoffmenge berechnet wird.

11. Verfahren nach einem der vorhergehenden Ansprüche,
**dadurch gekennzeichnet, daß**
die Brennkraftmaschine eine Otto- oder Diesel-Brennkraftmaschine ist.

12. Verfahren nach einem der vorhergehenden Ansprüche,
**dadurch gekennzeichnet, daß**
die Brennkraftmaschine mittels eines Abgasturboladers oder Druckwellenladers aufgeladen wird.

13. Brennkraftmaschine mit einer Vorrichtung (16) zum Aufladen dieser und einem Motorsteuergerät (20), welches einen zeitlichen Ablauf eines Öffnens und Schließens von Auslaßventilen und eine Kraftstoffeinspritzung steuert,
**dadurch gekennzeichnet, daß**
eine erste Vorrichtung (40;54) zum Bestimmen eines minimalen Lambda-Wertes und eine zweite Vorrichtung (26,24;32) zum Messen eines momentanen Lambda-Wertes der Brennkraftmaschine vorgesehen ist, wobei beide Vorrichtung mit einer dritten Vorrichtung (36) verbunden sind, die den bestimmten Lambda-Wert und den gemessenen Lambda-Wert miteinander vergleicht, wobei ferner die dritte Vorrichtung (36) mit einer Berechnungsvorrichtung (58) verbunden ist, welche für den Fall, daß der gemessene Lambda-Wert kleiner ist als der bestimmte minimale Lambda-Wert Daten für eine Zeitverstellung eines Öffnungszeitpunktes der Auslaßventile und/oder für eine Nacheinspritzung von Kraftstoff derart berechnet, daß sich als momentaner Lambda-Wert wenigstens der vorbestimmte minimale Lambda-Wert einstellt, wobei ferner die Berechnungsvorrichtung (58) mit dem Motorsteuergerät (20) verbunden ist und die berechneten Daten an das Motorsteuergerät (20) weitergibt.

14. Brennkraftmaschine nach Anspruch 13
**dadurch gekennzeichnet, daß**
die Zeitverstellung eines Öffnungszeitpunktes der Auslaßventile eine Verstellung der Auslaßventilöffnung nach früh oder spät ist.

15. Brennkraftmaschine nach Anspruch 13 oder 14,
**dadurch gekennzeichnet, daß**
die Daten für die Nacheinspritzung einen Zeitpunkt der Nacheinspritzung, eine Kraftstoffmenge für die Nacheinspritzung und/oder einen Druckverlauf für die Nacheinspritzung umfassen.

16. Brennkraftmaschine nach einem der Ansprüche 13 bis 15,
**dadurch gekennzeichnet, daß**
die erste Vorrichtung zum Bestimmen eines minimalen Lambda-Wertes ein Speicher (54) für einen fest vorbestimmten Wert, beispielsweise Lambda = 2, ist.

17. Brennkraftmaschine nach einem der Ansprüche 13 bis 15,
**dadurch gekennzeichnet, daß**
die erste Vorrichtung zum Bestimmen eines minimalen Lambda-Wertes eine Berechnungsvorrichtung (40) ist, welche den minimale Lambda-Wert aus momentanen Motor- und/oder Fahrzeugbetriebsparametem (42,44,46,48,50,52) berechnet.

18. Brennkraftmaschine nach einem der Ansprüche 17,
**dadurch gekennzeichnet, daß**
die momentanen Motor- und/oder Fahrzeugbetriebsparameter eine Drehzahl (42), eine Last, ein aktueller Ladedruck (44), eine Kühlmitteltemperatur (46) und/oder eine Abgastemperatur (50) sind.

19. Brennkraftmaschine nach einem der Ansprüche 13 bis 18,
**dadurch gekennzeichnet, daß**
der minimale Lambda-Wert in einem Kennfeld für den oder die verwendeten Motor- und/oder Fahrzeugbetriebsparametern in der ersten Vorrichtung (40) abgelegt ist.

20. Brennkraftmaschine nach einem der Ansprüche 13 bis 19,
**dadurch gekennzeichnet, daß**
die zweite Vorrichtung zum Messen eines momentanen Lambda-Wertes der Brennkraftmaschine eine vor oder nach einem Katalysator (18) in einer Abgasleitung (14) angeordnete Breitband-Lambdasonde (32) ist.

21. Brennkraftmaschine nach einem der Ansprüche 13 bis 20,
**dadurch gekennzeichnet, daß**
die zweite Vorrichtung zum Messen eines momentanen Lambda-Wertes der Brennkraftmaschine eine Berechnungsvorrichtung (26) ist, welche mit einem in einem Saugrohr (12) der Brennkraftmaschine angeordneten Luftmassenmesser (24) verbunden ist.

22. Brennkraftmaschine nach einem der Ansprüche 13 bis 21,
**dadurch gekennzeichnet, daß**
die Brennkraftmaschine eine Otto- oder Diesel-Brennkraftmaschine (10) ist.

23. Brennkraftmaschine nach einem der Ansprüche 13 bis 22,
**dadurch gekennzeichnet, daß**
die Vorrichtung (16) zum Aufladen der Brennkraftmaschine ein Abgasturbolader oder ein Druckwellenlader ist.

## Claims

1. Method for operating a supercharged internal combustion engine, in which an engine controller controls an operation of opening exhaust valves of the internal combustion engine and an operation of injecting fuel, **characterized by** the following steps:
(a) measuring an instantaneous lambda value while the internal combustion engine is operating,
(b) determining a minimum lambda value,
(c) comparing the measured lambda value with the determined minimum lambda value,
(d) calculating a time-shifted exhaust valve opening and/or an after injection of fuel in such a manner that at least the predetermined minimum lambda value is established as the instantaneous lambda value if in step (c) the measured lambda value is lower than the predetermined minimum lambda value, and
(e) transmitting the calculated values for the time-shifted exhaust valve opening and/or the after injection of fuel to the engine control unit.

2. Method according to Claim 1, **characterized in that** steps (a) to (e) are repeated cyclically while the internal combustion engine is operating.

3. Method according to Claim 1 or 2, **characterized in that** the time-shifted exhaust valve opening represents an adjustment of the exhaust valve opening to an early or late position.

4. Method according to one of the preceding claims, **characterized in that** in step (d) for the after injection an after injection time, a quantity of fuel for the after injection and/or a pressure profile for the after injection is calculated.

5. Method according to one of the preceding claims, **characterized in that** in step (b) the minimum lambda value is a fixedly predetermined value, for example lambda = 2.

6. Method according to one of Claims 1 to 4, **characterized in that** in step (b) the minimum lambda value is determined from instantaneous engine and/or vehicle operating parameters.

7. Method according to Claim 6, **characterized in that** the instantaneous engine and/or vehicle operating parameters are a rotational speed, a load, a current boost pressure, a coolant temperature and/or an exhaust-gas temperature.

8. Method according to one of the preceding claims, **characterized in that** the minimum lambda value is determined from a characteristic diagram for the engine and/or vehicle operating parameter(s) used.

9. Method according to one of the preceding claims, **characterized in that** in step (a) the instantaneous lambda value is determined by measurement using a wide-band lambda sensor upstream and/or downstream of a catalytic converter.

10. Method according to one of Claims 1 to 8, **characterized in that** in step (a) the instantaneous lambda value is calculated from an intake air mass measured in an induction pipe of the internal combustion engine and an injected fuel quantity.

11. Method according to one of the preceding claims, **characterized in that** the internal combustion engine is a spark-ignition or diesel internal combustion engine.

12. Method according to one of the preceding claims, **characterized in that** the internal combustion engine is supercharged by means of an exhaust-gas turbocharger or a pressure-wave supercharger.

13. Internal combustion engine having a device (16) for supercharging it and an engine control unit (20), which controls a temporal sequence of opening and closing of exhaust valves and an injection of fuel, **characterized in that** a first device (40; 54) for determining a minimum lambda value and a second device (26, 24; 32) for measuring an instantaneous lambda value of the internal combustion engine are provided, both devices being connected to a third device (36), which compares the determined lambda value and the measured lambda value with one another, the third device (36) also being connected to a calculation device (58) which, if the measured lambda value is lower than the determined minimum lambda value, calculates data for a time shift of an opening time of the exhaust valves and/or for an after injection of fuel, in such a manner that at least the predetermined minimum lambda value is established as the instantaneous lambda value, the calculation device (58) also being connected to the engine control unit (20) and transmitting the calculated data to the engine control unit (20).

14. Internal combustion engine according to Claim 13, **characterized in that** the time shift of an opening time of the exhaust valves is a shift in the exhaust valve opening towards an early or late position.

15. Internal combustion engine according to Claim 13 or 14, **characterized in that** the data for the after injection comprise a time for the after injection, a quantity of fuel for the after injection and/or a pressure profile for the after injection.

16. Internal combustion engine according to one of Claims 13 to 15, **characterized in that** the first device for determining a minimum lambda value is a memory (54) for a fixedly predetermined value, for example lambda = 2.

17. Internal combustion engine according to one of Claims 13 to 15, **characterized in that** the first device for determining a minimum lambda value is a calculation device (40) which calculates the minimum lambda value from instantaneous engine and/or vehicle operating parameters (42, 44, 46, 48, 50, 52).

18. Internal combustion engine according to Claim 17, **characterized in that** the instantaneous engine and/or vehicle operating parameters are a rotational speed (42), a load, a current boost pressure (44), a coolant temperature (46) and/or an exhaust-gas temperature (50).

19. Internal combustion engine according to one of Claims 13 to 18, **characterized in that** in the first device (40) the minimum lambda value is stored in a characteristic diagram for the engine and/or vehicle operating parameter(s) used.

20. Internal combustion engine according to one of Claims 13 to 19, **characterized in that** the second device for measuring an instantaneous lambda value of the internal combustion engine is a wide-band lambda sensor (32) arranged in an exhaust pipe (14) upstream or downstream of a catalytic converter (18).

21. Internal combustion engine according to one of Claims 13 to 20, **characterized in that** the second device for measuring an instantaneous lambda value of the internal combustion engine is a calculation device (26) which is connected to an air mass meter (24) arranged in an induction pipe (12) of the internal combustion engine.

22. Internal combustion engine according to one of Claims 13 to 21, **characterized in that** the internal combustion engine is a spark-ignition or diesel internal combustion engine (10).

23. Internal combustion engine according to one of Claims 13 to 22, **characterized in that** the device (16) for supercharging the internal combustion engine is an exhaust-gas turbocharger or a pressure-wave supercharger.

## Revendications

1. Procédé pour le fonctionnement d'un moteur à combustion interne suralimenté, dans lequel une commande de moteur pilote un processus d'ouverture des soupapes d'échappement du moteur à combustion interne et un processus d'injection de carburant,
**caractérisé par** les étapes suivantes,
(a) mesure d'un facteur Lambda instantané pendant le fonctionnement du moteur à combustion interne ;
(b) détermination d'un facteur Lambda minimal ;
(c) comparaison du facteur Lambda mesuré au facteur Lambda minimal déterminé ;
(d) calcul d'une ouverture des soupapes d'échappement décalée dans le temps et/ou d'une postinjection de carburant de sorte qu'au moins le facteur Lambda minimal prédéterminé soit réglé comme facteur Lambda instantané si, à l'étape (c), le facteur Lambda mesuré est inférieur au facteur Lambda minimal prédéterminé et
(e) transmission, à l'appareil de commande du moteur, des valeurs calculées pour l'ouverture des soupapes d'échappement décalée dans le temps et/ou la postinjection de carburant.

2. Procédé selon la revendication 1,
**caractérisé en ce que**
les étapes (a) à (e) sont répétées cycliquement pendant le fonctionnement du moteur à combustion interne.

3. Procédé selon la revendication 1 ou 2,
**caractérisé en ce que**
l'ouverture des soupapes d'échappement décalée dans le temps est un réglage en avance ou en retard de l'ouverture des soupapes d'échappement.

4. Procédé selon l'une quelconque des précédentes revendications,
**caractérisé en ce que**
à l'étape (d) relative à la postinjection, un moment de postinjection, une quantité de carburant de postinjection et/ou une évolution de la pression de postinjection est ou sont calculé(s).

5. Procédé selon l'une quelconque des précédentes revendications,
**caractérisé en ce que**
à l'étape (b), le facteur Lambda minimal est une valeur fixe prédéterminée, par exemple Lambda = 2.

6. Procédé selon l'une quelconque des revendications 1 à 4,
**caractérisé en ce que**
à l'étape (b), le facteur Lambda minimal est déterminé à partir de paramètres instantanés de fonctionnement du moteur et/ou du véhicule.

7. Procédé selon la revendication 6,
**caractérisé en ce que**
les paramètres instantanés de fonctionnement du moteur et/ou du véhicule sont un régime, une charge, une pression de suralimentation actuelle, une température de l'agent de refroidissement et/ou une température des gaz d'échappement.

8. Procédé selon l'une quelconque des précédentes revendications,
**caractérisé en ce que**
le facteur Lambda minimal est déterminé à partir d'un diagramme caractéristique pour le ou les paramètre(s) de fonctionnement de moteur et/ou de véhicule utilisé(s).

9. Procédé selon l'une quelconque des précédentes revendications,
**caractérisé en ce que**
à l'étape (a), le facteur Lambda instantané est déterminé par mesure au moyen d'une sonde Lambda à large bande placée avant et/ou après un catalyseur.

10. Procédé selon l'une quelconque des revendications 1 à 8,
**caractérisé en ce que**
à l'étape (a), le facteur Lambda instantané est calculé à partir d'une masse d'air aspirée et mesurée dans un tuyau d'aspiration du moteur à combustion interne et à partir d'une quantité de carburant injectée.

11. Procédé selon l'une quelconque des précédentes revendications,
**caractérisé en ce que**
le moteur à combustion interne est un moteur à allumage commandé ou à allumage spontané.

12. Procédé selon l'une quelconque des précédentes revendications,
**caractérisé en ce que**
le moteur à combustion interne est suralimenté au moyen d'un turbocompresseur à gaz d'échappement ou d'un compresseur à ondes de pression.

13. Moteur à combustion interne avec un dispositif (16) destiné à suralimenter celui-ci et un appareil de commande de moteur (20), lequel commande un déroulement chronologique d'ouverture et de fermeture des soupapes d'échappement et une injection de carburant,
**caractérisé en ce que**
un premier dispositif (40 ; 54) pour déterminer un facteur Lambda minimal et un deuxième dispositif (26, 24 ; 32) pour la mesure d'un facteur Lambda instantané d'un moteur à combustion interne sont prévus, les deux dispositifs étant reliés à un troisième dispositif (36) qui compare entre eux le facteur Lambda déterminé et le facteur Lambda mesuré, où le troisième dispositif (36) est, de plus, relié à un dispositif de calcul (58) lequel calcule, dans le cas où le facteur Lambda mesuré serait inférieur au facteur Lambda minimal déterminé, les données pour un décalage dans le temps du moment d'ouverture des soupapes d'échappement et/ou pour une postinjection de carburant de sorte que le facteur Lambda minimal prédéterminé se règle au moins en tant que facteur Lambda instantané, où le dispositif de calcul (58) est en plus relié avec l'appareil de commande du moteur (20) et transmet les données calculées à l'appareil de commande du moteur (20).

14. Moteur à combustion interne selon la revendication 13,
**caractérisé en ce que**
le décalage dans le temps du moment d'ouverture des soupapes d'échappement est un réglage en avance ou en retard de l'ouverture des soupapes d'échappement.

15. Moteur à combustion interne selon la revendication 13 ou 14,
**caractérisé en ce que**
les données de postinjection comprennent un moment de postinjection, une quantité de carburant de postinjection et/ou une évolution de la pression de postinjection.

16. Moteur à combustion interne selon l'une quelconque des revendications 13 à 15,
**caractérisé en ce que**
le premier dispositif pour la détermination d'un facteur Lambda minimal est une mémoire (54) pour une valeur fixe prédéterminée, par exemple Lambda = 2.

17. Moteur à combustion interne selon l'une quelconque des revendications 13 à 15,
**caractérisé en ce que**
le premier dispositif pour la détermination d'un facteur Lambda minimal est un dispositif de calcul (40), lequel calcule le facteur Lambda minimal à partir de paramètres instantanés de fonctionnement du moteur et/ou du véhicule (42, 44, 46, 48, 50, 52).

18. Moteur à combustion interne selon la revendication 17,
**caractérisé en ce que**
les paramètres instantanés de fonctionnement du moteur et/ou du véhicule sont un régime (42), une charge, une pression de suralimentation actuelle (44), une température du liquide de refroidissement (46) et/ou une température des gaz d'échappement (50).

19. Moteur à combustion interne selon l'une quelconque des revendications 13 à 18,
**caractérisé en ce que**
le facteur Lambda minimal est mémorisé par un premier dispositif (40) dans un diagramme caractéristique pour le ou les paramètre(s) de fonctionnement de moteur et/ou de véhicule utilisé(s).

20. Moteur à combustion interne selon l'une quelconque des revendications 13 à 19,
**caractérisé en ce que**
le deuxième dispositif pour la mesure d'un facteur Lambda instantané du moteur à combustion interne est une sonde Lambda à large bande (32) disposée dans une conduite de gaz d'échappement (14) avant ou après un catalyseur (18).

21. Moteur à combustion interne selon l'une quelconque des revendications 13 à 20,
**caractérisé en ce que**
le deuxième dispositif pour la mesure d'un facteur Lambda instantané du moteur à combustion interne est un dispositif de calcul (26), lequel est relié avec un appareil de mesure de débit massique d'air (24) placé dans un tuyau d'aspiration (12) du moteur à combustion interne.

22. Moteur à combustion interne selon l'une quelconque des revendications 13 à 21,
**caractérisé en ce que**
le moteur à combustion interne est un moteur à allumage commandé ou à allumage spontané (10).

23. Moteur à combustion interne selon l'une quelconque des revendications 13 à 22,
**caractérisé en ce que**
le dispositif (16) de suralimentation du moteur à combustion interne est un turbocompresseur à gaz d'échappement ou bien un compresseur à ondes de pression.
